# EUROPEAN PATENT APPLICATION

(11) **EP 1 465 100 A1**
(43) Date of publication of application: **06.10.2004**
(21) Application number: 04251997.5
(22) Date of filing: 02.04.2004
(51) Int. Cl.: G06F 17/60

(54) **A method of purchasing insurance ir validating an anonymous transaction**

(30) Priority: 05.04.2003 GB 0307906
(71) Applicant: Hewlett-Packard Development Company, L.P., Houston, Texas 77070 (US)
(72) Inventor: Pearson, Siani Lynne, Whitebrook, Llanvaches NP 26 3BA (GB)
(74) Representative: Lawrence, Richard Anthony

(57) **Abstract**

A method purchasing insurance is provided , the method comprising the steps of entering into a contract of insurance with the insurer based solely on the generalised identity (perhaps created for that particular purpose) that is associated with selected policy attributes (possibly generalised to ranges etc.) or statements that the user's attributes satisfy a policy, such that other attributes, including the real identity of the user, remain unknown to the insurer. The degree of which information is withheld or generalised is based on an assessment of the trustworthiness of the insurer's computer system.

## Description

The present invention relates to a method of purchasing insurance or validating an anonymous transaction, such that an individual's privacy is respected and yet they can still effectively conduct transactions where personal information is required.

Presently when a person applies for insurance (for example life assurance, health insurance, motor insurance, holiday insurance) they fill in a form which reveals their true identity and which also discloses other information which the insurer deems necessary.

Suppose that an individual wishes to obtain health insurance. Health insurance companies seek a fairly detailed inspection of an individual's medical history before issuing a quote. Furthermore the quotes issued may vary significantly from insurer to insurer.

It is well known that insurance brokers make their business by comparing the quotes of many insurance companies and then offering their client the best or a list of the best policies.

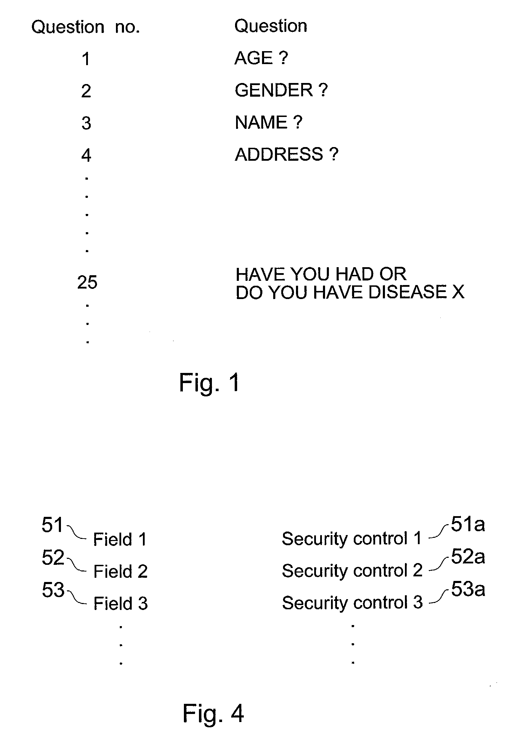

Such services are now available over the Internet. The individual may log on to a server of a broker and may be required to fill out a form detailing personal information to enable a quote to be derived. Figure 1 shows a table where the questions asked and our hypothetical individual's responses are summarised.

The questions, for example questions 3 and 4 relating to name and address, seek information that is sufficient to uniquely identify the individual. Other questions probe the medical history of the individual and may relate to data that the individual would not want known to others. Thus, for example, question 25 asks a specific question about treatment of a specific disease X. Disease X may be a disease that carries a social stigma or a real and continuing risk to the health of the individual or others close to that person. In order to get valid insurance an individual has to disclose the existence of disease X. However, they may be reluctant to do this since the form also contains information to uniquely identify them.

Following completion of the form, the broker's computer then contacts other computers owned or run by insurers and sends the results of the questionnaire to them.

Thus the individual has lost control over his personal information and has no idea where it has been sent, or what processing is being performed on that information.

US 2002/0103999 discloses a system in which a user identifies themselves only via a pseudonym and a trusted authority which can validate certain facts about the user.

US 2001/0044787 discloses a system in which a customer uses a trusted third party to act as a "secure private agent". The secure private agent acts as a proxy for the customer thereby preserving the anonymity of the customer.

US 2001/0054155 discloses a system for presenting personal information via the world wide web. In order to provide anonymity a trusted third party issues each user a universal anonymous identifier and indexes the user's personal information via the universal anonymous identifier.

WO02/49311 describes a system in which a party to a transaction can use a pseudonym such that their anonymity is maintained. Trusted third parties can be used to attest that certain characteristics or credentials are true in respect of a pseudonymous identity.

EP 1026603 discloses an arrangement in which individuals personal details are replaced with an identity number.

According to a first aspect of the present invention there is provided a method of conducting a transaction between a first entity and a second entity where as part of the transaction the second entity or an examination agent operating on behalf of the second entity requires information to assess a level of risk associated with transacting with the first entity, the method characterised by the steps of: a data processor acting on behalf of the first entity requesting a data processor acting on behalf of the second entity to provide data about itself; the data processor acting on behalf of the first entity analysing the response and determining an assessment of trust of the data processor operating on behalf of the second entity; defining a pseudonymous identity for the first entity; and providing data about the first entity to the second entity where data is selectively withheld or generalised in response to the assessment of trust.

Preferably the second entity is an insurer. The first entity is then a purchaser of insurance, either on their own behalf or on behalf of some one else or some organisation.

Preferably a contract relating to the transaction is entered into with the second entity based on the information provided such that the real identity of the first entity remains unknown to the second entity. The selective withholding or generalisation of information is performed in such a way that the identity of the first entity is unlikely to be obtainable by cross correlating facts revealed about them with information available from other sources.

The data provided about the first entity may include assertions about attributes of the first entity. For example, if a person was seeking motor vehicle insurance an assertion may be than they hold a driving licence.

It is thus possible for a purchaser of insurance to validly transact with an insurance company such that their privacy is respected, and such that information is released on a 'need to know' basis only. This prevents the purchaser's identity and confidential information being released outside the circumstances of the purchaser actually making a claim. The pseudonymous identity could merely be the creation of a false "name" for the user/entity wishing to purchase insurance. The false name could be a normal human name, e.g. John Smith, but in a preferred embodiment the pseudonymous identity is a computer generated character string or similar, ie an identification key.

Preferably the pseudonymous identity reveals or is associated with selected attributes (or facts or descriptors) concerning the first entity. Advantageously the first entity is a user of the method but this is not necessarily the case. Thus one person could seek to enter an insurance contract on behalf of another person, for example when a parent or guardian seeks insurance for or on behalf of a child who may be too young to have legal capacity to contract on their own behalf.

Preferably certain attributes (facts or data) relating to the first entity remain undisclosed to the insurer. This preserves the privacy of the first entity. Otherwise it might be possible for an insurer to correlate sufficient attributes relating to the first entity to identify it. Thus the data which is associated with the pseudonymous identity could be the user or first entity's real data, or more likely a sub-selection from it. However, as will be described later it is preferred that this data is processed such that it becomes a more general description of the user of first entity.

It is thus possible to provide an arrangement in which selected hidden attributes such as the user's real identity may remain unknown to the insurer until such time as the user needs to make a claim on the insurance, or may always remain known only to trusted third parties.

A trusted third party could validate information needed for satisfaction of the policy by vouching that the applicant satisfies various hidden criteria (criteria not disclosed to the insurer) for insurance (which could be generalised to heighten the degree of anonymity of the user), or did satisfy them at the time of application. This could be ascertained via the trusted third party sending an assertion about certain conditions being met relating to the user of the pseudonymous identity so that the insurer could check that this would meet the policy conditions, or else by the insurer sending the third party the policy conditions and the trusted third party merely indicating that these conditions were met, without giving details necessarily as to how they were met. Thus the trusted third patty acts as a policy examination agent. Such assertions could be in the form of certificates signed by the trusted third party associating the applicant's pseudonymous identity with such information. Alternatively, a platform owner could self-certify such information based on a user's identity and attributes of that user, although the insurer is unlikely to regard self-certification as adequately trustworthy unless the user is considered to be trustworthy source, such as a known enterprise. Preferably, the trusted parts of the computer platform would act as roots of trust in this certification process, as considered further below.

The pseudonymous identity may be merely an identification key generated by the user or by their computer. The identity may be comprised of/or associated with information held within a trusted computer (also known as a trusted computing platform). It is not necessary to use TCPA identities to implement the invention, although the use of TCPA identities is a preferred method of implementation.

The first identity/user may create a pseudonymous identity for each transaction if they so wish. Each identity may be associated with different facts about the real user and these facts about the user vary depending upon the nature of the insurance policy. Thus some information about the user may be accurately given to the insurer, some information may be withheld and some information may be generalised. Thus some of the user's real data is hidden or omitted during the construction of the attribute base associated with the pseudonymous identity.

Trusted Computing Platforms are defined in the specification published via www.trustedcomputing.org. Such a trusted computing platform may be, for example, of the type described in WO00/48063. Thus the computing platform may contain several trusted compartments which may operate at different levels of trust. The trusted compartments isolate the processes running within the compartment from processes in other compartments. They also control access of the processes or applications running therein to platform resources. Trusted compartments have additional properties in that they are able to record and provide proof of the execution of a process and also provide privacy controls for checking that the data is being used only for permitted purposes and/or is not being interrogated by other processes.

The "walls" of compartments may be defined by dedicated hardware or be defined in software.

Trusted computing platform (TCP) architectures are based around the provision of a trusted component which is tamper resistant or tamper evident and whose internal processes cannot be subverted. A TCP preferably includes a hardware trusted component which allows an integrity metric (ie. a summary of an integrity measurement) of the platform to be calculated and made available for interrogation. It is this device which underpins the integrity of a TCP. The trusted component can help audit the build of the platform's operating system and other applications such that a user or operator can challenge the platform to verify that it is operating correctly.

Co-pending applications, such as GB 0118455.5 entitled "Audit Privacy" by Hewlett Packard disclose that it is possible to provide an audit process that can verify that a process can be run on a trusted computing platform, that access by the operator or owner of the trusted computing platform to the processes is inhibited, and that access to the audit information is restricted.

In a preferred implementation the audit process exists within a trusted component thereby ensuring that its operation cannot be subverted. The results of the audit are generally stored in protected or encrypted form in memory within a trusted computing platform. The audit data is itself partitioned into sets such that investigation of audit data in one set does not disclose the data in other ones of the audit sets. The trusted component may make an assessment of one or more computing platforms which request the audit data. If the platform is on an unknown or untrusted type, and/or has unapproved means for viewing the audit data, then the data may be withheld.

It is advantageous to propagate private information through a computer platform or system or network, to take advantage of resources and services. Trusted computing platforms, of the type described previously, for example, may provide a safe processing environment for private information provided that the owner of the private data retains control over the private information.

The provision of a trusted component means that the user can have one or more trusted pseudonymous identities. The identities are trusted because the trusted computing architecture enables a trusted third party, i.e. a certification authority (CA) to confirm the trustworthiness of the trusted component. The certification authority can interrogate the trusted component and can validate the identity of the trusted component. The trusted component can then validate pseudonymous identities associated with it. TCPA provides a particular protocol for generating TCPA identities, as is described in the TCPA Specification v1.1 (downloadable via www.trustedcomputing.org). This protocol involves the owner (who is not necessarily the user!), the trusted component and a trusted third party (a privacy CA chosen by the owner).

Thus it becomes possible to provide the insurer (or indeed any other service provider which can deal with an anonymous or pseudonymous client) with some way of performing authentication that the pseudonymous identity with which it transacts or communicates relates to a specific real world entity, such as a company or individual. Indeed, it may also provide a way of enabling the real world identity of the customer to be made available to the insurer provided that certain conditions are satisfied. These conditions may be determined, at least in part, by the customer of the insurance company.

The insurance company may provide or stipulate a procedure for rendering a user's data generalised or generic. This results in the creation of a generacised identity.

If the user is satisfied that their information can be rendered pseudonymous or generalised automatically then the user may permit an agent to receive their real data and to process it such that the real user's attributes are anonymised and the real user is given a pseudonymous identity. The agent could be a privacy agent executing on the user's own computing device. Additionally or alternatively a privacy agent, an pseudonymising agent or an agent for generalising the data may execute on a third party computing device. A user may choose to restrict the use of such agents unless the user can receive a validation that the information will be processed in an environment where it will be transported in a secure manner and will not be made available for other purposes. Such assurances can be provided by the use computers in conformity with the TCP architectures and utilising the concept of compartments with audit privacy as discussed hereinbefore.

It is advantageous that the process of adding a pseudonymous identity in place of a user's real identity should also withhold or generalise some of the user's information, otherwise the combination of data may be sufficiently specific to identify the real person to which the pseudonymous identity relates.

Thus if a user is, for example, 43 years old the procedure for rendering the data generalised may place the age into an age range. Thus one range may be 40 to 45. The procedure for rendering the user data generalised (or otherwise anonymising it) may provide for differing levels of anonymity and a higher level of anonymity may have a higher cost penalty associated with it to reflect the fact that the insurer may be covering a greater unquantified risk.

Similarly dissimilar groups having similar risks may be clumped together such that the user can either identify himself by reference to the group as a whole or may, as part of his pseudonymous identity, define that he belongs to an equivalent member within the group. Thus, if for insurance purposes Bristol, England and Southampton, England were places categorised in group A for risk assessment for a particular kind of insurance, then validly a person living in Bristol could either indicate that they lived in Bristol, in Southampton or a place in group A. The level of risk for all of these options is defined as being equivalent and hence any would allow the insurer to quote whilst allowing the customer to retain their privacy.

Alternatively a trusted third party, in this case a transaction agent, could accept the customer's real data on the condition that it would not disclose it. The trusted third party/transaction agent could then run a quote procedure and offer a quote. If the customer chooses to accept the quote then the transaction agent issues the policy and informs the insurer that it has done so. The insurer may be provided with the pseudonymous identity of the customer thereby allowing it to communicate with this customer, but remains blind to the real world identity of the customer.

The ability for the level of disclosure to vary depending on the trust than can be placed in the data processing systems involved in the transaction is particularly useful. Thus the computer systems, or applications running within a single computer, may negotiate with each other in order to determine their respective levels of trust. This may, for example, be done via TCPA integrity checking. This enables a user to select a level of disclosure of their data - possibly to the extent of making all of their real data available if they are happy that the trusted third party will execute processes on it but will not reveal it. The level of disclosure allows the user to trade off anonymity versus cost where cost is a function of knowing information about the user.

Advantageously an identifier can be used to confirm a relationship between one or more pseudonymous identities and a customer or users real identity.

This enables the insurer to communicate with the user/individual to seek further information or to issue the policy.

The insurance policy is associated with the pseudonymous user identity and is negotiated and agreed with reference to selected attributes only. Optionally, the negotiation process involves the user's agreement to reveal more attributes (ie data about themselves). Optionally, the user will reveal a level or class of attributes, dependent upon the software state of the insurer (checked using TCPA integrity checking), that the user might not normally wish to reveal.

Payments may be accepted by an anonymised payment procedure with reference being made to the policy number and/or the pseudonymous identity.

In a preferred embodiment the invention is implemented using a combination of agent technology and TCPA. Agents can be located on the client platform and the insurance platform, and possibly also on intermediary platforms or on trusted third parties. Preferably, the agents are integrity checked using an extension of the TCPA boot process and the TPM can vouch for (sign) the generalised attributes, or the complete policy that is sent out. The agents control exactly what attributes are released. Attributes can be gathered via the TPM and/or stored using the TCPA 'protected storage' functionality. Optionally, attributes can be associated with the platform's software environment (using TCPA 'protected storage' functionality) such that the attribute information will not be released unless the platform is in approved state (to protect secrets in a hacked environment).

According to a second aspect of the present invention there is provided a method of purchasing insurance, comprising the steps of: an insurer making its conditions for insurance available to a third party. a customer making its responses to the conditions for insurance available to the third party, and the third party analysing the responses and determining whether insurance can be offered to the customer and if so validating to the insurer that a policy has been issued to the customer and that the customer satisfies the insurer's conditions, wherein the customer enters their data onto a trusted computer together with their policy agent which defines how information relating to the customer can be disclosed to an insurance examination agent, and the trusted computer interrogates the data processing environment and policies of the third party to determine how trustworthy the third parties is, and adjusts the way in which it discloses information about the customer on the basis of the determination of trustworthiness.

According to a third aspect of the present invention there is provided an apparatus for conducting a transaction comprising a first data processor acting on behalf of a second entity, and where as part of the transaction the second entity or an examination agent operating on behalf of the second entity requires information to assess a level of risk associated with transacting with the first entity, wherein: the first data processor requests the second data processor to provide information about itself and the policies of the second entity; the first data processor analyses the response and assesses the amount of trust that should be attributed to the second data processor and/or the second entity; the first data processor defines a pseudonymous identity for the first entity; and the first data processor provides information about the first entity to the second data processor where information is associated with the pseudonymous identity and information is selectively withheld or generalised in response to the assessment of the amount of trust attributed to the second data processor.

The present invention will further be described, by way of example only, with reference to the accompanying drawings, in which:
Figure 1 schematically illustrates the sort of data sought by an insurer to issue an insurance policy;
Figure 2 schematically illustrates the processes involved for anonymising data;
Figure 3 schematically illustrates options provided within a policy agent;
Figure 4 schematically illustrates an association between a user's personal data and their privacy controls;
Figure 5 illustrates a computer network suitable for carrying out a transaction in accordance with an embodiment of the present invention; and
Figure 6 schematically illustrates the steps performed to determine the level of trust to be placed in the insurer's server.

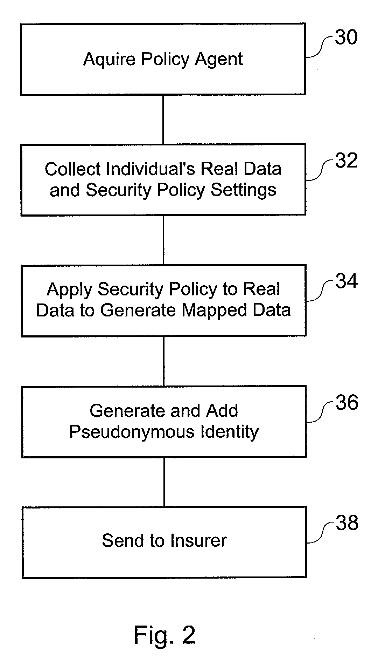

As shown in Figure 2, before seeking to engage in an insurance transaction a user needs to acquire a copy of an appropriate policy agent, at step 30. The policy agent provides a trusted procedure for converting an individual's real data into an anonymised set of data. It will be appreciated that different insurers ask different questions, and indeed the questions relating to different types of insurance also differ. The policy agent may be provided by a broker which provides an interface to products offered by a plurality of insurance companies or other service providers. The policy agent may be a "trusted" agent and hence may include a verification protocol for enabling a user to assess the level of trustworthiness of the policy agent and the data processor it is executing on. However, this is not strictly necessary and the agent may simply be run by a service provider who has a declared policy (or not) about how they respect a user's data.

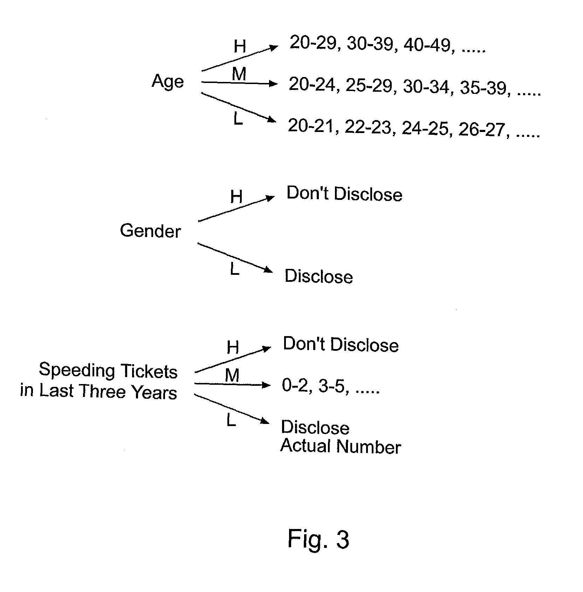

Figure 3 illustrates a policy agent for motor insurance together with mapping options depending on security/privacy options set as part of the privacy policy of the user.

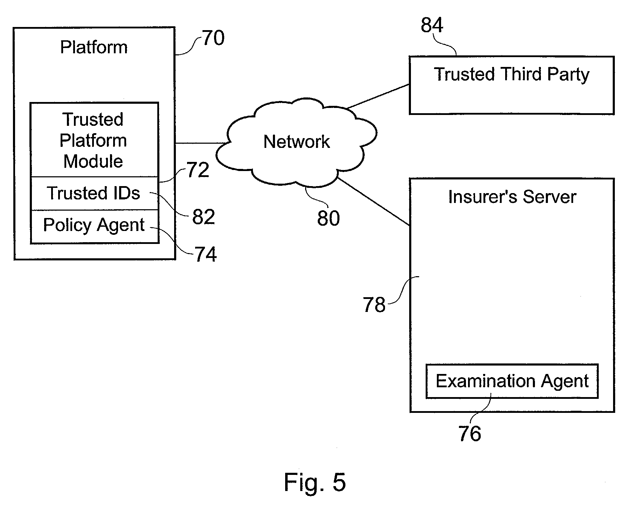

The user may have pre-entered much of the commonly requested data and privacy policy statements relating to that data. Thus, as shown in Figure 4, a user can enter specific types of data, such as age, gender, address in data fields 1 to 3, labelled 51 to 53 respectively, together with associated security controls 51a to 53a, respectively. The security controls enforce a user's privacy policy. The security controls may be simple settings, such as High (H), medium (M) and low (L) as shown in Figure 3. However they may also be more complex, and may for example implement rules which may determine the level of security/privacy to be applied based on conditions such as the nature of the questions asked or external considerations such as the level of security provided in the data transmission channel or the security features of the computing device which is requesting the information in order to process the insurance policy request. The user's computing device may issue a challenge to the computing device which is requesting the information. The challenge may enquire whether the computing device requesting the information has a secure computing architecture, for example whether it includes a trusted computing module. It may also ask for other information, such as whether the machine booted in a secure state, what operating system is has, what patches have been applied, what other processes are running, and does the machine support and uphold compartments.

The user's device may make evaluations of trustworthiness solely on the basis of the responses. However, it may also contact other information providers, such as trusted third parties, to obtain corroborating information to help prove or indeed rebuke assertions concerning the trustworthiness of the computer requesting the information.

If the user and/or the user's computer determines that the computer (and it's operators) requesting information is trustworthy then it may provide the information in its true form or provide information in low security mapped forms, as described below.

Returning to Figure 3, the policy agent may seek information concerning an individual's age. In this example the policy agent allows for 3 levels of mapping to render the data anonymised. It is appreciated that other (more or fewer) levels of mapping could be applied.

The highest privacy mapping H assigns the user's age into age ranges each spanning ten years. The intermediate privacy mapping M assigns the user's age into ranges each spanning 5 years, whereas the lowest privacy mapping L assigns the user's age into groups each spanning 2 years.

Similarly with regards to the second question requiring an indication of gender, the user can either set their security/privacy policy such that this information is withheld or it is disclosed.

The third question in the example shown in Figure 3 relates to whether the user has received any tickets or convictions for speeding in the last three years. The policy agent in this example gives the user the option not to disclose this information in a high privacy option, to disclose the data in ranges in a medium privacy option or to disclose the actual number in a low privacy option.

Each of these choices in the example of Figure 3 varies the amount of data collected by the policy agent and made available to the insurer. The insurer will naturally base the quote or insurance offer on the basis of the information available to them and hence a desire for privacy may incur a financial penalty to the user. If the user or his computer does not believe that the computer requesting the information is trustworthy then his policy agent (or the user themselves) may cause information to be withheld or generalised to a medium or high level.

Returning to Figure 2, the policy agent after having collected the user's real data (either from direct entry, stored data or both) maps the data in accordance with the user's security policies at step 34 and then adds a pseudonymous identity at step 36 before communicating with the insurer at step 38. Thus the pseudonymous identity is associated with generalised data. This prevents data mining techniques being used to identify the real world identity behind the pseudonymous identity.

The pseudonymous identity may be created by the user, or be created automatically. The user may use this identity each time he or she wishes to communicate with the insurance company. This amounts to self certifying ones own identity and has a risk that third parties could maliciously assume that identity. A user could certify his own identity, but whether anyone else trusted that identity would depend upon whether they trusted the user because people won't trust an identity unless they trust the certifying authority. In instances where the user has a trusted computing device the ability of the TCP to generate trusted computing platform architecture (TCPA) identities can be invoked. Reference can be made to the TCPA specification published at www.trustedcomputing.org.

The trusted component (often called a trusted computing module, TPM) has control over multiple pseudonymous attestation identities. An attestation identity does not contain any owner or user related information. It is solely a platform identity used to attest to platform properties, and a TPM only uses the attestation identities to prove to a third party that it is a genuine TCPA conformant TPM.

Each attestation identity is created on the TPM with attestation from a certification authority chosen by the platform owner. Each attestation identity has a randomly generated asymmetric cryptographic key and an arbitrary textural string used as an identifier for the pseudonym - which is chosen by the owner/user of the trusted computing device. To obtain attestation from the certification authority, the trusted computing device sends the certification authority information that proves the identity was created by a genuine trusted platform. This process relies on the provision of signed certificates from the manufacturer of the TPM and a secret installed in the TPM. The secret is known only to the TPM and is used only under the control of the owner of the platform. In particular, the secret is not divulged to arbitrary third parties, in contrast to attestation identities. The trusted platform owner/user may choose different certification authorities to certify each TPM identity in order to prevent correlation of the identities being performed.

It is thus possible to enable a user to anonymously conduct a transaction, for example to purchase an insurance product.

In fact, it will be appreciated that this process can be extended to many services where physical delivery of an item is not required. Indeed, if a trusted delivery agency is used so as to anonymised the delivery address then physical items can be purchased anonymously.

Figure 5 schematically illustrates the interaction between various components engaged in performing an insurance transaction consisting an embodiment of the present invention. A user's computer 70 which includes a trusted computing module 72 executes a policy agent 74 so as to format data for submission to an examination agent 76 executing within an insurer's server 78. The data is transmitted via a telecommunication network 80, such as the internet.

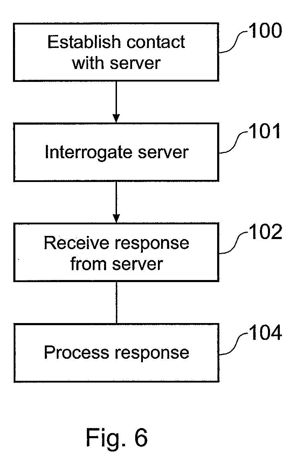

During a first stage of the process, shown in Figure 6, the user's computer 70 establishes contact with contact with the server 78 at step 100 and then interrogates the insurer's server 78 at step 101 to try to determine information which allows the computer 70 to determine how trustworthy the server 78 is. As noted before this can involve requesting metrics of the boot and operating system build process. It may also seek information as to whether the computer is upholding compartments such that data cannot leak between applications running on the server 78. The computer 70 may also request information about audit privacy processes that may be running.

All of this information, and/or the lack of response from the server 78 at step 102 can be used by the computer 70 at step 104 to judge the level of trust that could reasonably be placed in the server 78. The rules for assessing the level of trust may be defined by the user or may be acquired from a rules base that may be maintained by a third party.

The policy agent can either format the data such that items which are not to be disclosed are removed from the data or alternatively these items are masked in such a way that they are not accessible to the insurer without the owner of the data making unmasking information available.

The trusted computing module may store one or more trusted identities 82 which can be associated with a pseudonymous identity chosen by the user. This combination of identities can be made available to a certification authority (a trusted third party) which can check the association between the trusted identities contained within the trusted computing device 72 and the pseudonymous identity. If these identities are correctly associated the certification authority 84 sends a message confirming the validity of the pseudonymous identity - that is it confirms that the pseudonymous identity is correctly allocated to a real identity.

The insurer's computer can then quote for the policy or request more specific information. This can be returned to the user via an anonymising service such as a bulletin board or via a trusted proxy such that the user's e-mail address does not become disclosed. The user may then accept the policy, decline it, or provided further information.

In a variation on the above method, the examination agent may pass its criteria for offering insurance to the trusted third party 84, and the user may make all of his information available to the trusted third party. The trusted third party could then, in effect, act as an agent for the insurer by executing the examination and issuing a policy or quote, and then confirming to the insurer that it had done this and that the conditions laid out in the examination agent were satisfied and that insurance has been issued on an anonymous basis to the user.

The trusted third party does however contain a list allowing the policy number of the insurance to be uniquely associated with the user.

Only when seeking to make a claim on the insurance does the user need to reveal sufficient information about his true identity to enable the insurer to validate and process the claim and make any appropriate payments.

It is thus possible to provide a method in which the user has a real identity which the user wishes to remain hidden, at least at the time of negotiating the insurance policy. In order to achieve this a user can create a pseudonymous identity which is linked to the user. The pseudonymous identity along with generalised attributes can be sent to an insurer so that they can assess the insurance risk and offer a quote. Alternatively the insurer can send their rules for offering insurance to a third party who assesses whether the user satisfies the requirements, and if so makes a statement to the insurer that the pseudonymous identity relates to a user who meets the insurer's requirements.

## Claims

1. A method of conducting a transaction between a first entity and a second entity where as part of the transaction the second entity or an examination agent operating on behalf of the second entity requires information to assess a level of risk associated with transacting with the first entity, the method **characterised by** the steps of:
a) a data processor (70) acting on behalf of the first entity requesting a data processor (78) acting on behalf of the second entity to provide data about itself;
b) the data processor (70) acting on behalf of the first entity analysing the response and determining an assessment of trust of the data processor (78) operating on behalf of the second entity;
c) defining a pseudonymous identity (36) for the first entity; and
d) providing data about the first entity to the second entity where data is selectively withheld or generalised in response to the assessment of trust.

2. A method of conducting a transaction as claimed in claim 1, in which the method **characterised by** further comprising the step of entering into a contract for the transaction based on data provided about the first entity such that the identity of the first entity remains unknown to the second entity.

3. A method as claimed in claim 1 or 2, **characterised in that** the transaction is the purchase of insurance, and for a given type of insurance the pseudonymous identity is associated with sufficient information to enable the insurer or an insurance examination agent to assess a level of risk for pricing or issuing an insurance.

4. A method as claimed in claim 3, **characterised in that** when seeking to claim on the insurance policy, the data pertaining to the first entity are made available to the insurer in order that the insurer can validate that there is an acceptable level of correlation between the pseudonymous identity and the first entity.

5. A method as claimed in any one of the preceding claims, in which the first entity submits their information or responses via a trusted computer (70), and wherein a trusted platform module within the trusted computer generates a user identity which can be used in future to confirm the identity of the first entity.

6. A method as claimed in any one of the preceding claims **characterised in that** the first entity enters their data onto a trusted computer together with their policy agent which defines how information relating to the first entity can be disclosed.

7. A method as claimed in claim 4, in which the transaction relates to the purchase of insurance and the policy agent communicates with an insurance examination agent in order to negotiate and authorise an insurance policy.

8. A method as claimed in claim 5, in which the trusted computing platform (70) and a server (78) running the examination agent authenticate with one another such that the policy issued to the first entity via the pseudonymous identity is linked to an identity used in the authentication or to a further identifier provided by the first entity.

9. A method as claimed in claim 1, in which the generalised data is generated by a generalising agent acting in accordance with a user's security policy.

10. A method of purchasing insurance, comprising the steps of:
i) an insurer making its conditions for insurance available to a third party;
ii) a customer making its responses to the conditions for insurance available to the third party, and
iii) the third party analysing the responses and determining whether insurance can be offered to the customer and if so validating to the insurer that a policy has been issued to the customer and that the customer satisfies the insurer's conditions, wherein
iv) the customer enters their data onto a trusted computer together with their policy agent which defines how information relating to the customer can be disclosed to an insurance examination agent, and the trusted computer interrogates the data processing environment and policies of the third party to determine how trustworthy the third parties is, and adjusts the way in which it discloses information about the customer on the basis of the determination of trustworthiness.

11. A method as claimed in claim 10, in which the transaction is conducted electronically and in which the customer submits their information or responses via a trusted computer, and wherein a trusted platform module within the trusted computer generates a user identity which can be used in future to confirm the identity of the customer.

12. A method as claimed in claim 3, in which, when seeking to claim on the insurance policy, the details of the first entity are made available to the insurer in order that the insurer can validate that there is an acceptable level of correlation between the generalised identity and the first entity.

13. A method as claimed in claim 10, in which a pseudonymous identity is formed based on a generacised identity, the pseudonymous identity including pseudonymous information which can be exchanged with the insurer so that the insurer can validate that it is communicating with the first entity via its pseudonymous identity.

14. An apparatus for conducting a transaction comprising a first data processor acting on behalf of a second entity, and where as part of the transaction the second entity or an examination agent operating on behalf of the second entity requires information to assess a level of risk associated with transacting with the first entity, wherein:
a) the first data processor requests the second data processor to provide information about itself and the policies of the second entity;
b) the first data processor analyses the response and assesses the amount of trust that should be attributed to the second data processor and/or the second entity;
c) the first data processor defines a pseudonymous identity for the first entity; and
d) the first data processor provides information about the first entity to the second data processor where information is associated with the pseudonymous identity and information is selectively withheld or generalised in response to the assessment of the amount of trust attributed to the second data processor.

15. An apparatus as claimed in claim 14, in which the first computer executes a policy agent which controls how information relating to the first entity is disclosed.

16. An apparatus as claimed in claim 14, in which the first computer has a trusted platform module which generates a user identity which can be used to confirm the identity of the first entity.
